# EUROPEAN PATENT SPECIFICATION

(11) **EP 2 783 840 B1**
(45) Date of publication and mention of the grant of the patent: **23.09.2020**
(21) Application number: 13382115.7
(22) Date of filing: 27.03.2013
(51) Int. Cl.: B29C 70/54, B29C 33/16, B29D 99/00, F03D 1/06, B29L 31/08, B29C 70/44

(54) **Methods of manufacturing composite structures and moulds for manufacturing composite structures**
Verfahren zur Herstellung von Verbundstrukturen und Formen zur Herstellung von Verbundstrukturen
Procédés de fabrication de structures composites et moules de fabrication de structures composites

(43) Date of publication of application: 01.10.2014
(73) Proprietor: GE Renewable Technologies Wind B.V., 4817 PA Breda (NL)
(72) Inventor: Feigl, Luca, 08006 BARCELONA (ES)
(74) Representative: de Rooij, Mathieu Julien

(56) References cited:
- EP-A1- 2 308 670
- DE-A1-102010 015 199
- JP-A- S6 262 719

## Description

The present application relates to methods of manufacturing composite structures, for example composite wind turbine blades. The disclosure further relates to a mould for manufacturing such composite structures.

### BACKGROUND ART

Modern wind turbines are commonly used to supply electricity into the electrical grid. Wind turbine blades are typically attached, at a blade root portion, to a rotor hub, either directly or through an extender. The rotor is set into rotation under the influence of the wind on the blades. The rotation of the rotor shaft drives the generator rotor either directly ("directly driven") or through the use of a gearbox. The operation of the generator produces the electricity to be supplied into the electrical grid. In order to extract a larger amount of energy from the wind the blades are increasing in size.

The blades are typically made from composite materials: reinforcing fibres may be bonded to one another with a resin and, subsequently, cured to consolidate. Different kinds of fibres (e.g. glass, carbon, combinations) and resins (e.g. epoxy, polyester, vinyl ester) may be used in different forms (e.g. prepreg, fibre sheets).

In general terms, a manufacturing process of a wind turbine blade may comprise a first step of moulding and curing two separate longitudinal blade halves (shells) made out of composite material and a second step of joining together these two blade halves and removing the final blade from the mould. Alternatively, a complete blade may be manufactured in a single moulding step.

A well-known process for manufacturing of shells for large wind turbines is the infusion process. The general principle of infusion is to "suck" a resin into the reinforcing fibres using a vacuum. With infusion processes substantially low cost and high quality blades can be manufactured. Infusion processes have the added benefit of having substantially low volatile emissions.

As the size of the blades increases, the moulds also become larger in diameter and length. Large moulds may comprise a portion having a substantially vertical inner surface, in particular in the portion where the root of the blades is formed. The root of a blade may comprise a substantially cylindrical portion. The fibre layers laid up in such a large mould are also large and heavy and it may be difficult to maintain them in the correct position, especially when they are positioned along such a substantially vertical portion of the mould. They can have a tendency to fall or slide down.

Some known manufacturing methods use stitching or gluing of the fibre layers to each other in order to form temporary bonds holding the fibre layers in place until a stack ready for infusion is formed. But this can create discontinuities or wrinkles in the end material and in the geometry of the final structure which lead to undesired stress concentration points.

Document EP2153964 describes methods of manufacturing a wind turbine blade comprising steel wire reinforced matrix material in which at least 20% by volume of the fibre material consists of metallic wires. The blades are manufactured in moulds comprising magnet means along an upwardly facing forming surface. The magnets can be used to retain or secure the fibre layers against the forming surface. However the blades manufactured according to such methods comprise metallic elements embedded in the composite material. These blades can be heavier than blades manufacture from composite material only. Furthermore the metallic elements can interfere with the lightning rod.

DE 10 2010 015199 A1 discloses a method for constructing a three-dimensional preform for a component made of a fiber composite material comprising the following steps: a) providing a tool carrier corresponding to the three-dimensional shape of the preform; b) depositing a fiber bundle of dry fibers on the workpiece carrier, wherein the fibers are optionally temporarily fixed in sections; c) fixing the fibers on the edge of the workpiece carrier; and repeating these steps to form the preform.
There thus still exists a need for improved methods of manufacturing wind turbine blades, in particular large wind turbine blades that reduce or even avoid the formation of wrinkles or discontinuities during the manufacturing process.

### SUMMARY

In a first aspect a method of manufacturing a composite structure according to claim 1 is provided. The method comprises: providing a mould having an inner surface with a close to vertical portion, placing a fibre layer on the mould inner surface on the close to vertical portion and arranging one or more clamping elements on top of the fibre layer with the close to vertical portion such that the clamping elements create a pressing force on the fibre layer against the mould. The method further comprises removing the clamping elements, placing a new fibre layer overlying a previous fibre layer and arranging the clamping elements on top of the new fibre layer. The steps of removing the clamping elements, placing a new fibre layer and rearranging the clamping elements are repeated until a stack of fibre layers is formed.

According to this aspect, a clamping element is arranged on top of a fibre layer that is distributed on the mould inner surface. Hereby, a pressing force is provided by the clamping elements on the fibre layers towards the mould. The fibre layers may thus be kept in place, even along a portion of the mould with significant curvature, i.e. at a close to vertical portion or at a vertical portion. Furthermore, once the clamping elements are removed, substantially no trace of the pressing force is left on the composite structure. Wrinkles and/or discontinuities may thus be reduced or substantially avoided.

In accordance with the invention, the clamping elements are magnetically attractable elements and the mould comprises one or more first magnets embedded within the close to vertical portion such that in use the magnetically attractable elements are attracted by the first magnets embedded in the mould. Alternatively, according to the invention, the clamping elements are second magnets and the mould may comprise one or more metallic elements embedded within the close to vertical portion such that in use the second magnets are attracted to the metallic elements embedded in the mould. In some embodiments, the method may further comprise removing the clamping elements, covering the stack of fibre layers with a peel ply layer, and arranging the clamping elements on top of the peel ply layer. The peel ply layer is an easily removable layer that allows free passage of volatiles and resin excess. This way, the arrangement of a peel ply layer may help to improve the smoothness of the final outer surface of the composite structure. An adhesion property of the composite structure to, for example, other fibre layers or other composite structures may thus also be improved.

According to the invention, the method further comprises arranging a vacuum bag on top of the stack of fibre layers and the clamping elements or arranging a vacuum bag on top of a peel ply layer covering the stack of fibre layers and the clamping elements, directing a resin into the mould with the stack of fibre layers, heating for curing and removing the clamping elements after curing. This way, when a resin is directed into the mould and further cured to consolidate the composite structure, the clamping elements are still pressing on the fibre layers towards the mould. Wrinkles and/or discontinuities may thus be minimized also during these stages of the process.

In some embodiments, the method may further comprise providing a fastening system for holding the magnetically attractable elements or the second magnets. In some of these embodiments, the fastening system may be hingedly attached to a portion of the mould. This can simplify the process as the magnetically attractable elements or second magnets may have a precise site. Furthermore, when they need to be removed for example for distributing a new fibre layer they remain clamped to e.g. the mould. Depending on circumstances, a control system may further be adapted to now control the fastening system and in these cases automation of the process can be at least partially achieved.

In some embodiments, the fastening system may be made of fibres fixed to a portion of the mould such that after curing, at least part of the fibres may be integrated in the composite structure. The fibres may be substantially the same or similar to the fibres used for the composite structure. This way, traces of the fastening system in the composite structure surface are also thus avoided.

According to the invention, the mould is a mould for forming a blade shell and placing a fibre layer and/or covering the stack of fibre layers with a peel ply layer may be done on the entire mould inner surface such that after distributing a first portion of fibre layer and/or peel ply layer on the mould inner surface ,the clamping elements may be removed, a further portion of fibre layer and/or peel ply layer may be distributed and the clamping elements may be rearranged on top of this further portion.

According to the invention the mould comprises a plurality of clamping elements. The clamping elements are consecutively arranged one after another along part or the entire length of the mould inner surface and the method comprises distributing a first portion of fibre layer on the mould inner surface, removing a clamping element, distributing a further portion of fibre layer on a part of the mould inner surface on which the clamping element was arranged and rearranging the clamping element on top of this further portion. Optionally, these steps may be repeated until a fibre layer is distributed along the entire length of the mould inner surface. The fibres are thus kept in place along part or the entire length of the mould inner surface which reduces their tendency to fall or slide down.

In a further aspect a method of manufacturing a wind turbine blade is provided. The method comprises manufacturing two blade shells with a method substantially as hereinbefore described and bonding together the two blade shells.

Additional objects, advantages and features of embodiments of the present invention will become apparent to those skilled in the art upon examination of the description, or may be learned by practice of the invention.

### BRIEF DESCRIPTION OF THE DRAWINGS

Particular embodiments of the present invention will be described in the following by way of non-limiting examples, with reference to the appended drawings, in which:
Figure 1 shows a mould for forming a composite structure;
Figures 2a, 2b and 2c show a sequence of three stages of a method of manufacturing a composite structure in the mould of figure 1; and
Figure 3 shows a mould for forming a composite structure.

### DETAILED DESCRIPTION

All through the figures the same reference numbers will be used to denote the same or very similar elements.

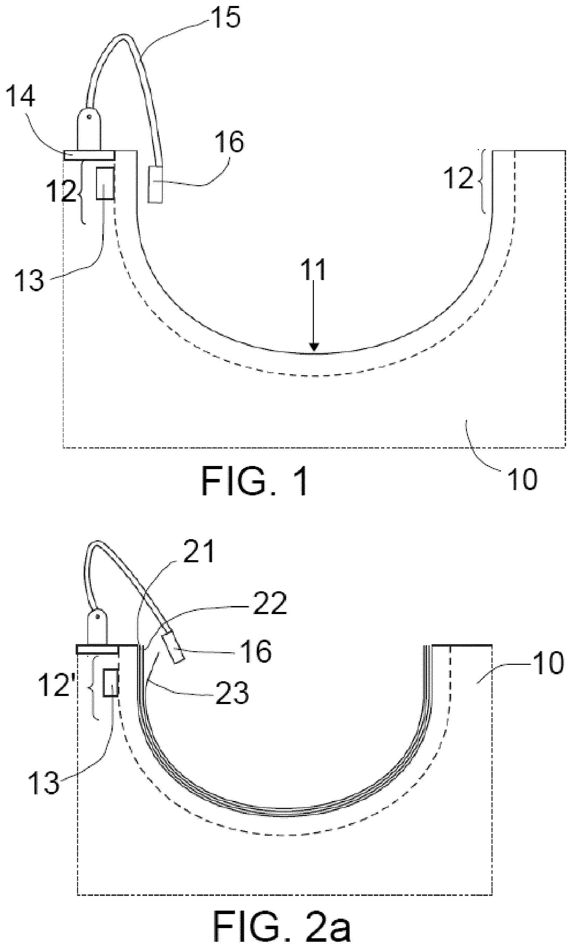

Figure 1 shows a mould 10 for manufacturing of a composite structure such as a wind turbine blade root half. The mould 10 may have an inner surface 11 with two vertical or close to vertical portions 12. The following explanation considers only the presence of one of these close to vertical portions but it is fully applicable to the other one.

The mould has a magnet 13 embedded and arranged with the vertical or close to vertical portions 12 of the inner surface 11. The magnet 13 may be arranged relatively close to the inner surface 11 of the mould 10. In further embodiments, a different number of magnets may be embedded in the vertical or close to vertical portion of the mould and in other portions of the mould as well. The magnets may be electromagnets.

The mould 10 may further comprise a support 14 for a fastening system 15 and a metallic element 16 that may be clamped by the fastening system 15. In further embodiments, another number of metallic elements may also be foreseen. The fastening system 15 is designed such that in use, the metallic element 16 is attracted by the magnet 13 embedded in the mould. Alternatively, instead of magnets embedded in the mould, metallic elements are provided. In these cases, the metallic element clamped by the fastening system is replaced by a magnet.

Although reference is made herein to metallic elements, these elements may further be replaced by other magnetically attractable elements.

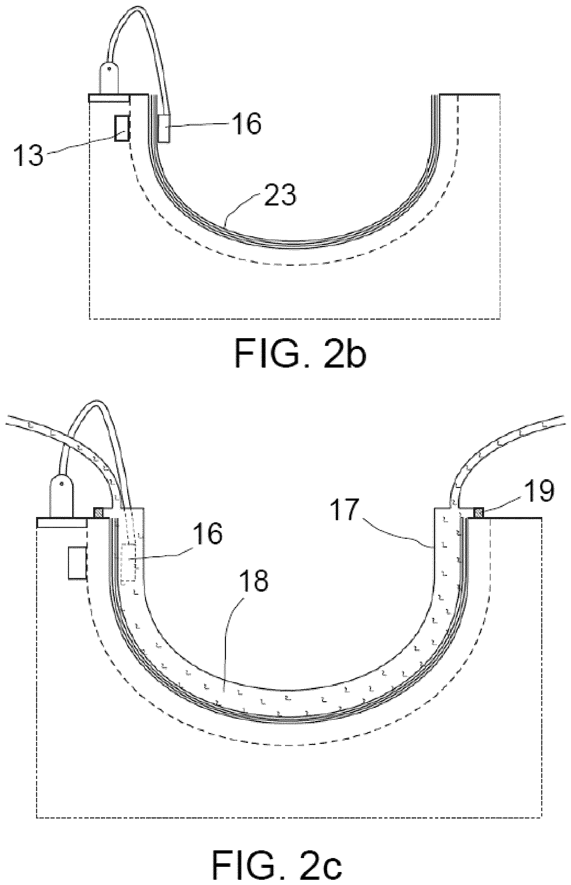

Figures 2a, 2b and 2c show a sequence of three stages of an example of a method of manufacturing a blade root half or a blade shell in the mould of figure 1.

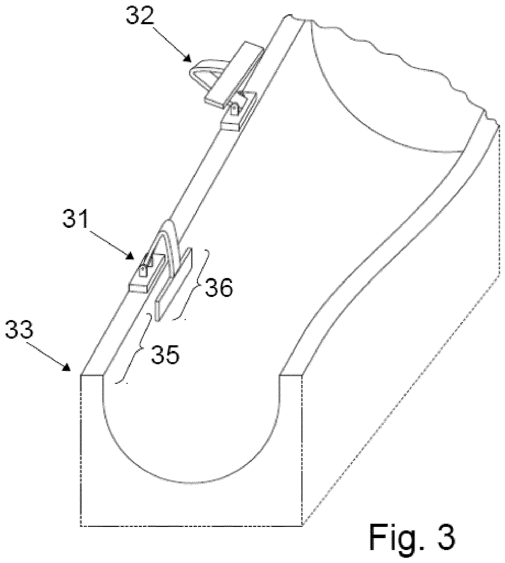

Figure 2a shows the stage of placing a third fibre layer 23. In this example, two fibre layers 21 and 22 were previously distributed on the mould inner surface 11 and a third fibre layer 23 is already distributed in practically the whole mould inner surface 11 with the exception of the vertical or close to vertical portion 12'. The metallic element 16 has been temporarily removed and the third fibre layer 23 is being placed on the vertical or close to vertical portion 12' of the mould. Figure 2a clearly shows the tendency to fall of this last fibre layer. Although in figure 2a the fibre layers seem to be distributed in a circumferential direction it should be understood that a longitudinal distribution of fibre layers may also be possible. In practice, a stack of fibres may also be formed in which several layers have different orientations. The mould of the example shown in figure 3 may have specific advantages for longitudinal distribution of fibre layers.

Figure 2b shows the next step i.e. arranging the metallic element 16 on top of the third fibre layer 23 at the vertical or close to vertical portion 12' of the mould 10. With this action the tendency to fall has been substantially removed. Wrinkles of the fibre layers are also substantially avoided. Fibre layers 21, 22 and 23 may constitute a stack of fibre layers ready for infusion. Optionally a peel ply layer may be distributed in a similar manner as explained in connection with fibre layer 23. In these cases the last layer of the stack of fibre layers ready for infusion is the peel ply layer.

Figure 2c shows a further step in which a vacuum bag 17 is arranged on top of the stack of fibre layers 21, 22 and 23 with the metallic element 16. Sealing elements 19 may be further provided at each end of the vacuum bag 17. The vacuum bag 17 may be connected at one end to a resin tank (not shown) and at the other end to a vacuum pump (not shown). In figure 2c resin 18 has already been directed to the mould with the fibre layers and the metallic element 16.

In further embodiments a peel ply layer may be arranged on top of the fibre layers before arranging the vacuum bag. In these cases, before arranging the peel ply layer at the close to vertical portion, the metallic elements may be removed and after arranging the peel ply layer on such a portion the metallic elements may be re arranged on top of the stack with the peel ply layer.

In some embodiments, the fastening system may be made of fibres. This way, at least the portion of fibres forming the fastening system that may remain covered by the vacuum bag (see dashed lines in figure 2c) can be integrated with the stack of fibres after curing.

Figure 3 shows a partial mould 30 for manufacturing a blade shell. According to figure 3 two clamping elements 31 and 32 may be hingedly fixed to the mould 30. The two clamping elements are consecutively arranged one 32 after another 31 longitudinally along the mould 30. Clamping element 31 is shown as if it were on top of a fibre layer distributed on the mould inner surface and clamping element 32 is shown as if it were removed in order to leave space for distributing a fibre layer on the mould inner surface.

With the example of figure 3 a longitudinal distribution of the fibre layers can be improved. For example if one starts distributing a fibre layer at a first end 33 of the mould 30, considering the fact that a first fibre layer (not shown) has already been distributed along the inner surface of the mould 30, the following steps are needed in order to distribute a new fibre layer: distributing the new fibre layer on a first portion 35 of the mould inner surface, removing clamping element 31 from a second portion 36, distributing the new fibre layer (not shown) on this second portion 36 (which corresponds to the portion that was covered by clamping element 31) and rearranging clamping element 31 on top of the new fibre layer on this second portion 36. Substantially repeating these actions at each portion of the mould wherein a clamping element is provided.

Depending on the length and the size of the final composite structure, further embodiments may comprise more clamping elements. The clamping elements are consecutively arranged one after another along part or the entire length of the mould inner surface. The fibres may thus be kept in place along part or the entire length of the mould inner surface which reduces their tendency to fall or slide down.

In other embodiments, the clamping elements may be fixed to the mould by fibres which may be fibres suitable for the manufacture of composite structures. This way, once cured, at least part of these fibres remains within the composite structure.

Depending on circumstances, a control system may further be adapted to control the operation of the different clamping elements i.e. arranging or removing each clamping element in turn in order to coordinate the distribution of a fibre layer along the entire length of the mould inner surface. In these cases automation of the process can be at least partially achieved.

## Claims

1. Method of manufacturing a composite structure, the method comprising:
a. providing a mould (10) for forming a blade shell having an inner surface (11) with a close to vertical portion (12, 12'), wherein the mould further comprises a plurality of clamping elements (16, 31, 32) for clamping one or more fibre layers of the composite structure, the clamping elements (31, 32) being consecutively arranged one after another along part or the entire length of the mould inner surface and the clamping elements (16) comprising magnetically attractable elements and the mould comprising one or more first magnets (13) embedded in the close to vertical portion (12, 12') or the clamping elements comprising second magnets and the mould comprising one or more magnetically attractable elements embedded in the close to vertical portion (12, 12') such that in use the magnetically attractable elements are attracted by the first magnets (13) or the second magnets are attracted to the magnetically attractable elements;
b. placing a fibre layer (21) on the mould inner surface on the close to vertical portion (12, 12'),
c. arranging the clamping elements (16) on top of the fibre layer (21) with the close to vertical portion (12, 12')such that the clamping elements (16) create a pressing force on the fibre layer against the mould,
d1. distributing a first portion of a new fibre layer on the mould inner surface,
d2. removing one of the clamping elements (16),
e. distributing a further portion (36) of the fibre layer on a part of the mould inner surface on which the clamping element was arranged and
f. rearranging the clamping element (16) on top of the further portion, and repeating steps d - f until a stack of fibre layers (21-23) is formed, wherein the method further comprises
arranging a vacuum bag (17) on top of the stack of fibre layer (21-23) and the clamping elements (16) or arranging a vacuum bag on top of a peel ply layer covering the stack of fibre layers and the clamping elements,
providing a resin (18) into the mould with the stack of fibre layers (21-23),
heating for curing, and
removing the clamping elements (16) after curing.

2. Method according to claim 1, further comprising providing a fastening system (15) for holding the magnetically attractable elements or the second magnets.

3. Method according to claim 2, wherein the fastening system (15) is hingedly attached to a portion of the mould.

4. Method according to any of claims 2-3, wherein the fastening system is made of fibres fixed to a portion of the mould such that after curing, the fibres are integrated in the composite structure, the fibres being substantially the same or similar to the fibres used for the composite structure.

5. Method according to any of claims 1-4, wherein the first and/or second magnets are electromagnets.

6. Method according to any of claims 1-5, wherein the method comprises distributing a first portion (35) of peel ply layer on the mould inner surface, removing a clamping element (31), distributing a further portion (36) of peel ply layer on a part of the mould inner surface on which the clamping element (31) was arranged and rearranging the clamping element (31) on top of this further portion.

7. Method of manufacturing a wind turbine blade comprising manufacturing two blade shells with a method according to claim 6 and bonding together the two blade shells.

## Patentansprüche

1. Verfahren zur Herstellung einer Verbundstruktur, wobei das Verfahren umfasst:
a. Bereitstellen einer Form (10) zum Bilden einer Blattschale mit einer Innenfläche (11) mit einem nahezu vertikalen Abschnitt (12, 12'), wobei die Form ferner eine Vielzahl von Klemmelementen (16, 31, 32) zum Einklemmen von einer oder mehreren Faserschichten der Verbundstruktur umfasst, wobei die Klemmelemente (31, 32) nacheinander entlang eines Teils oder der gesamten Länge der Forminnenfläche angeordnet sind und die Klemmelemente (16) magnetisch anziehbare Elemente umfassen und die Form einen oder mehrere erste Magnete (13) umfasst, die in den nahezu vertikalen Abschnitt (12, 12') eingebettet sind, oder die Klemmelemente zweite Magnete umfassen und die Form ein oder mehrere magnetisch anziehbare Elemente umfasst, die in den nahezu vertikalen Abschnitt (12, 12') derart eingebettet sind, dass die magnetisch anziehbaren Elemente bei Verwendung von den ersten Magneten (13) angezogen werden oder die zweiten Magnete von den magnetisch anziehbaren Elementen angezogen werden;
b. Platzieren einer Faserschicht (21) auf die Forminnenfläche an dem nahezu vertikalen Abschnitts (12, 12'),
c. Anordnen der Klemmelemente (16) auf der Faserschicht (21) mit dem nahezu vertikalen Abschnitt (12, 12') derart, dass die Klemmelemente (16) eine Druckkraft auf die Faserschicht gegen die Form erzeugen,
d1. Einlegen eines ersten Abschnitts einer neuen Faserschicht auf der Forminnenfläche,
d2. Entfernen eines der Klemmelemente (16),
e. Einlegen eines weiteren Abschnitts (36) der Faserschicht auf einem Teil der Forminnenfläche, auf dem das Klemmelement angeordnet war und
f. erneutes Anordnen des Klemmelements (16) auf dem weiteren Abschnitt und Wiederholen der Schritte d-f, bis ein Stapel von Faserschichten (21-23) gebildet ist,
wobei das Verfahren ferner umfasst
Anordnen eines Vakuumbeutels (17) auf dem Stapel von Faserschicht (21-23) und den Klemmelementen (16) oder Anordnen eines Vakuumbeutels auf einer Abreißgewebeschicht, die den Stapel der Faserschichten und die Klemmelemente bedeckt,
Bereitstellen eines Harzes (18) in die Form mit dem Stapel von Faserschichten (21-23), Erwärmen zum Aushärten und
Entfernen der Klemmelemente (16) nach dem Aushärten.

2. Verfahren nach Anspruch 1, ferner umfassend das Bereitstellen eines Befestigungssystems (15) zum Halten der magnetisch anziehbaren Elemente oder der zweiten Magnete.

3. Verfahren nach Anspruch 2, wobei das Befestigungssystem (15) an einem Abschnitt der Form gelenkig angebracht ist.

4. Verfahren nach einem der Ansprüche 2-3, wobei das Befestigungssystem aus Fasern besteht, die an einem Abschnitt der Form befestigt sind, so dass die Fasern nach dem Aushärten in die Verbundstruktur integriert sind, wobei die Fasern im Wesentlichen gleich oder ähnlich den Fasern sind, die für die Verbundstruktur verwendet werden.

5. Verfahren nach einem der Ansprüche 1-4, wobei der erste und/oder der zweite Magnet Elektromagnete sind.

6. Verfahren nach einem der Ansprüche 1-5, wobei das Verfahren das Ausbreiten eines ersten Abschnitts (35) einer Abreißgewebeschicht auf der Forminnenfläche, das Entfernen eines Klemmelements (31) und das Ausbreiten eines weiteren Abschnitts (36) einer Abreißgewebeschicht auf einem Teil der Forminnenfläche, auf dem das Klemmelement (31) angeordnet war, und erneutes Anordnen des Klemmelements (31) auf diesem weiteren Abschnitt umfasst.

7. Verfahren zur Herstellung eines Windturbinenblatts, umfassend das Herstellen von zwei Blattschalen mit einem Verfahren nach Anspruch 6 und das Zusammenkleben der beiden Blattschalen.

## Revendications

1. Procédé de fabrication d'une structure composite, le procédé comprenant les étapes consistant à :
a. fournir un moule (10) pour former une coque de pale ayant une surface intérieure (11) avec une partie proche de la verticale (12, 12'), dans lequel le moule comprend en outre une pluralité d'éléments de serrage (16, 31, 32) pour serrer une ou plusieurs couches de fibres de la structure composite, les éléments de serrage (31, 32) étant disposés consécutivement les uns après les autres sur une partie ou sur toute la longueur de la surface intérieure du moule et les éléments de serrage (16) comprenant des éléments magnétiquement attirables et le moule comprenant un ou plusieurs premiers aimants (13) intégrés dans la partie proche de la verticale (12, 12') ou les éléments de serrage comprenant des seconds aimants et le moule comprenant un ou plusieurs éléments magnétiquement attirables intégrés dans la partie proche de la verticale (12, 12') de telle sorte qu'en cours d'utilisation, les éléments magnétiquement attirables sont attirés par les premiers aimants (13) ou les seconds aimants sont attirés par les éléments magnétiquement attirables ;
b. placer une couche de fibres (21) sur la surface intérieure du moule sur la partie proche de la verticale (12, 12'),
c. disposer les éléments de serrage (16) sur le dessus de la couche de fibres (21) avec la partie proche de la verticale (12, 12') de telle sorte que les éléments de serrage (16) créent une force de pression sur la couche de fibres contre le moule,
d1. distribuer une première partie d'une nouvelle couche de fibres sur la surface intérieure du moule,
d2. retirer l'un des éléments de serrage (16),
e. distribuer une autre partie (36) de la couche de fibres sur une partie de la surface intérieure du moule sur laquelle l'élément de serrage était disposé et
f. réarranger l'élément de serrage (16) au-dessus de l'autre partie, et répéter les étapes d à f jusqu'à ce qu'un empilement de couches de fibres (21-23) soit formé,
le procédé comprenant les étapes consistant à :
disposer un sac sous vide (17) sur le dessus de l'empilement de couches de fibres (21 à 23) et les éléments de serrage (16) ou disposer un sac sous vide sur le dessus d'une couche de tissu d'arrachage recouvrant l'empilement de couches de fibres et les éléments de serrage,
fournir une résine (18) dans le moule avec l'empilement de couches de fibres (21 à 23),
chauffer jusqu'au durcissement, et
retirer les éléments de serrage (16) après le durcissement.

2. Procédé selon la revendication 1, comprenant en outre la fourniture d'un système de fixation (15) pour maintenir les éléments magnétiquement attirables ou les seconds aimants.

3. Procédé selon la revendication 2, dans lequel le système de fixation (15) est fixé de manière articulée à une partie du moule.

4. Procédé selon l'une quelconque des revendications 2 à 3, dans lequel le système de fixation est constitué de fibres fixées à une partie du moule de telle sorte qu'après le durcissement, les fibres soient intégrées dans la structure composite, les fibres étant sensiblement identiques ou similaires aux fibres utilisées pour la structure composite.

5. Procédé selon l'une quelconque des revendications 1 à 4, dans lequel les premier et/ou second aimants sont des électroaimants.

6. Procédé selon l'une quelconque des revendications 1 à 5, dans lequel le procédé comprend la distribution d'une première partie (35) de couche de tissu d'arrachage sur la surface intérieure du moule, le retrait d'un élément de serrage (31), la distribution d'une autre partie (36) de couche de tissu d'arrachage sur une partie de la surface intérieure du moule sur laquelle l'élément de serrage (31) était disposé et le réarrangement de l'élément de serrage (31) au-dessus de cette autre partie.

7. Procédé de fabrication d'une pale d'éolienne comprenant la fabrication de deux coques de pales avec un procédé selon la revendication 6 et le collage des deux coques de pales.
